(19) Europäisches Patentamt / European Patent Office / Office européen des brevets

(11) EP 2 267 643 B1

(12) **FASCICULE DE BREVET EUROPEEN**

(45) Date de publication et mention
de la délivrance du brevet:
**04.03.2015 Bulletin 2015/10**

(51) Int Cl.:
***G06K 19/07*** *(2006.01)*

(21) Numéro de dépôt: **10160754.7**

(22) Date de dépôt: **22.04.2010**

(54) **Evaluation résistive du facteur de couplage d'un transpondeur électromagnétique**

Widerstandsbewertung des Kopplungsfaktors eines Elektromagnetischen Transponders

Resistive assessment of the coupling coefficient of an electromagnetic transponder

(84) Etats contractants désignés:
**AT BE BG CH CY CZ DE DK EE ES FI FR GB GR
HR HU IE IS IT LI LT LU LV MC MK MT NL NO PL
PT RO SE SI SK SM TR**

(30) Priorité: **19.06.2009 FR 0954148**

(43) Date de publication de la demande:
**29.12.2010 Bulletin 2010/52**

(73) Titulaire: **STMicroelectronics (Rousset) SAS
13790 Rousset (FR)**

(72) Inventeur: **Wuidart, Luc
83910 Pourrières (FR)**

(74) Mandataire: **de Beaumont, Michel
Cabinet Beaumont
1, rue Champollion
38000 Grenoble (FR)**

(56) Documents cités:
**EP-A1- 0 722 094   EP-A1- 1 045 325
FR-A1- 2 757 952   US-A1- 2008 204 206**

**Description**

<u>Domaine de l'invention</u>

La présente invention concerne de façon générale les systèmes électroniques et plus particulièrement, les systèmes utilisant des transpondeurs électromagnétiques, c'est-à-dire des émetteurs-récepteurs susceptibles d'être interrogés sans contact et sans fil par un terminal de lecture et/ou d'écriture.

<u>Exposé de l'art antérieur</u>

Les systèmes de communication basés sur une modulation d'un champ électromagnétique généré par un terminal sont multiples. Cela va de la simple étiquette électronique servant d'antivol à des systèmes plus complexes où un transpondeur, devant communiquer avec le terminal dans le champ duquel il se trouve, est équipé de fonctions de calcul (porte-monnaie électronique par exemple) ou de traitement d'information.

Les systèmes à transpondeurs électromagnétiques sont basés sur l'emploi de circuits oscillants comprenant un enroulement formant antenne, côté transpondeur et côté terminal. Ces circuits sont destinés à être couplés par champ magnétique proche lorsque le transpondeur entre dans le champ du terminal. Les circuits oscillants du terminal et du transpondeur sont généralement accordés sur une même fréquence correspondant à la fréquence d'excitation du circuit oscillant du terminal.

Dans la plupart des cas, les transpondeurs sont dépourvus d'alimentation autonome et extraient l'alimentation nécessaire aux circuits qu'ils comportent du champ haute fréquence rayonné par l'antenne du terminal.

La qualité de la communication et de l'éventuel transfert d'énergie dépend du couplage entre le terminal et le transpondeur. Ce couplage, qui est inversement proportionnel (non linéaire) à la distance entre le terminal et le transpondeur, conditionne l'amplitude de la tension récupérée par le transpondeur. Il existe donc un besoin de pouvoir évaluer le facteur de couplage courant entre un transpondeur et un terminal dans le champ duquel il se trouve.

Le document US-A-2008/0204206 décrit un système de transmission à transpondeur dans lequel le transpondeur comporte un dispositif de mesure temporelle configuré pour déterminer une durée caractéristique d'un état chargé d'un accumulateur d'énergie.

<u>Résumé</u>

Il serait souhaitable de pouvoir évaluer le facteur de couplage entre un transpondeur et un terminal.

Il serait également souhaitable de pouvoir évaluer l'évolution de ce facteur de couplage lors d'une communication.

Il serait également souhaitable de pouvoir évaluer le facteur de couplage sans qu'il soit nécessaire d'effectuer un échange de données entre le terminal et le transpondeur.

Il serait également souhaitable de pouvoir effectuer cette évaluation côté transpondeur.

Il serait également souhaitable de proposer une solution indépendante du type de terminal dans le champ duquel se trouve le transpondeur.

Pour atteindre tout ou partie de ces objets ainsi que d'autres, il est prévu un procédé d'évaluation du facteur de couplage courant entre un transpondeur électromagnétique et un terminal, dans lequel un rapport entre des informations, représentatives d'une tension aux bornes d'un circuit oscillant du transpondeur et obtenues pour deux valeurs de charge résistive, est comparé à un ou plusieurs seuils.

Selon un mode de réalisation de la présente invention :

une première information, relative au niveau d'une tension continue fournie par un redresseur aux bornes du circuit oscillant, est mesurée et mémorisée pour une première valeur de charge résistive ; et
une seconde information, relative au niveau de ladite tension continue, est mesurée et mémorisée pour une seconde valeur de charge résistive.

Selon un mode de réalisation de la présente invention, l'évaluation fournit une position du facteur de couplage courant par rapport à une position de couplage optimum avec une des deux valeurs de charge résistive.

Selon un mode de réalisation de la présente invention, lesdits seuils sont fonction desdites valeurs.

Selon un mode de réalisation de la présente invention, une variation de la charge résistive entre les première et seconde valeurs est obtenue en modifiant la consommation de circuits de traitement que comporte le transpondeur.

Selon un mode de réalisation de la présente invention, une variation de la charge résistive entre les première et seconde valeurs est obtenue en commutant un élément résistif de rétromodulation que comporte le transpondeur.

On prévoit également un procédé de protection d'un transpondeur électromagnétique contre une éventuelle surchauffe à partir d'une évaluation du couplage, dans lequel un désaccord du circuit oscillant est provoqué si le rapport entre le couplage courant et le couplage optimum est compris entre deux seuils.

On prévoit également un transpondeur électromagnétique comportant :

un circuit oscillant en amont d'un circuit de redressement propre à fournir une tension continue lorsque le transpondeur se trouve dans le champ magnétique d'un terminal ; et
au moins une unité de traitement programmée pour mettre en oeuvre le procédé d'évaluation ou de protection.

Selon un mode de réalisation de la présente invention, le transpondeur comporte en outre au moins un élément résistif commutable propre à être fonctionnellement connecté en parallèle sur le circuit oscillant.

Selon un mode de réalisation de la présente invention, ledit élément résistif commutable est connecté aux bornes de sortie du circuit de redressement.

Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :

la figure 1 est une représentation très schématique d'un système à transpondeur du type auquel s'applique à titre d'exemple la présente invention ;
la figure 2 est un schéma bloc simplifié d'un terminal et d'un transpondeur d'un système de communication à transpondeur électromagnétique ;
la figure 3 illustre un exemple d'allure de la tension aux bornes du circuit oscillant du transpondeur en fonction du facteur de couplage ;
la figure 4 est un schéma bloc fonctionnel illustrant un mode de mise en oeuvre du procédé d'évaluation du facteur de couplage ; et
la figure 5 est un schéma bloc d'un mode de réalisation d'un transpondeur adapté à évaluer son facteur de couplage avec un terminal.

Description détaillée

De mêmes éléments ont été désignés par de mêmes références aux différentes figures. Par souci de clarté, seuls les étapes et éléments utiles à la compréhension de l'invention ont été représentés et seront décrits. En particulier, les communications entre le transpondeur et le terminal n'ont pas été détaillées, l'invention étant compatible avec toute communication usuelle. De plus, les fonctions susceptibles d'être mises en oeuvre par un terminal ou par un transpondeur, autres que la détermination du facteur de couplage par ce transpondeur, n'ont pas non plus été détaillées, l'invention étant, là encore, compatible avec toute fonction usuelle d'un terminal ou d'un transpondeur.

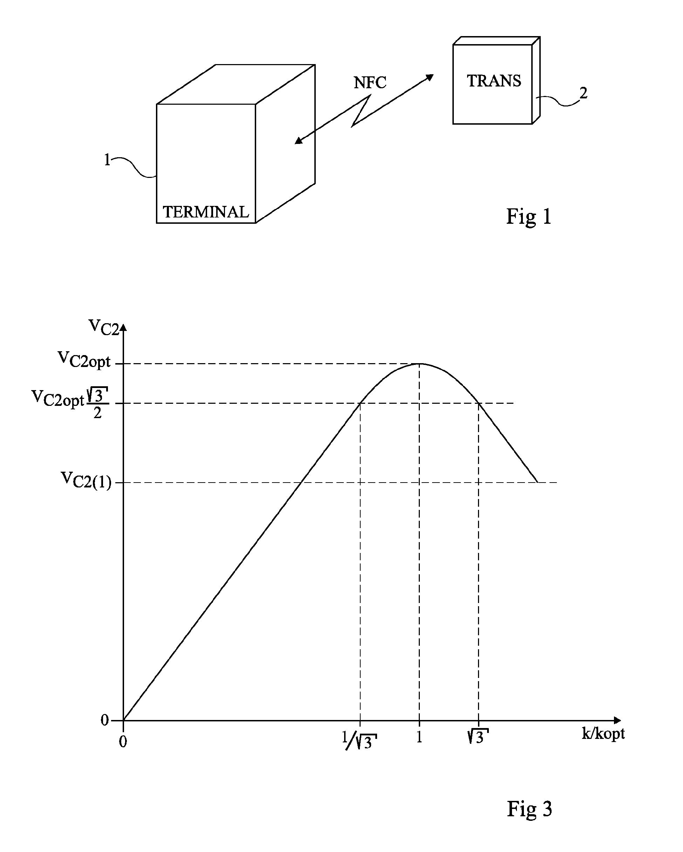

La figure 1 est un schéma bloc d'un système de communication à transpondeur électromagnétique. Un terminal 1 (TERMINAL) est susceptible de communiquer en champ proche (par exemple selon un protocole NFC - Near Field Communication) avec un élément distant, à savoir un transpondeur (TRANS).

Le terminal peut prendre différentes formes, par exemple, une borne de validation de titres de transport, un lecteur de passeports électroniques, un ordinateur portable, un dispositif mobile de communication (téléphone GSM, assistant numérique personnel - PDA, etc.), un boîtier électronique de démarrage d'un véhicule automobile, etc.

Le transpondeur peut de même prendre différentes formes, par exemple, une carte à puce, un titre de transport électronique, un passeport électronique, un terminal de télécommunication (téléphone GSM, PDA, etc.), une étiquette électronique, etc.

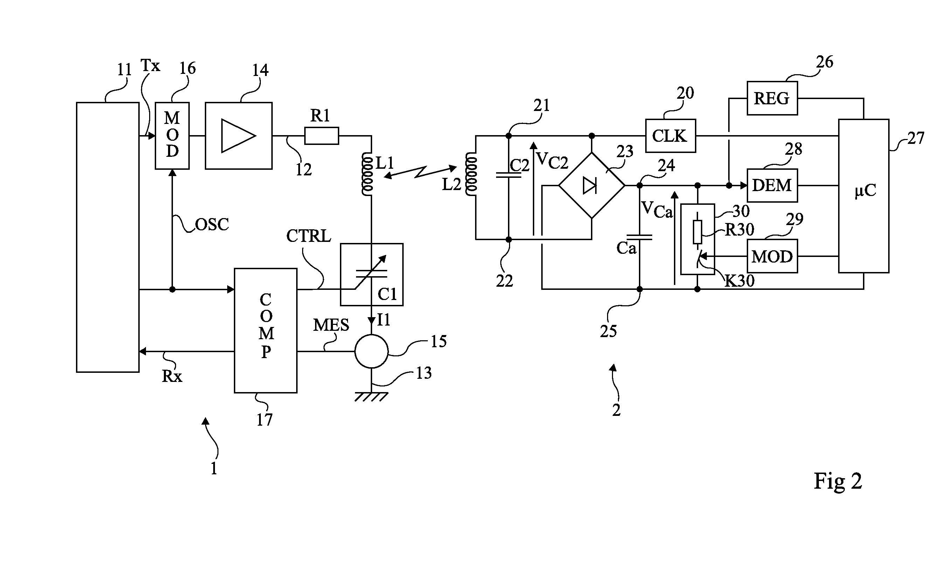

La figure 2 représente, de façon très schématique et simplifiée, un exemple de terminal 1 et de transpondeur 2.

Le terminal 1 comporte un circuit oscillant, généralement série, formé d'une inductance L1 en série avec un condensateur C1 et une résistance R1. Ce circuit oscillant série est, dans l'exemple de la figure 2, connecté entre une borne 12 de sortie d'un amplificateur ou coupleur d'antenne 14 et une borne 13 à un potentiel de référence (généralement la masse). Un élément 15 de mesure du courant dans le circuit oscillant est intercalé, par exemple, entre l'élément capacitif C1 et la masse 13. Cet élément de mesure 15 fait partie d'une boucle de régulation de phase qui sera décrite plus loin. L'amplificateur 14 reçoit un signal de transmission haute fréquence issu d'un modulateur 16 (MOD) qui reçoit une fréquence de référence (signal OSC) par exemple d'un oscillateur à quartz (non représenté). Le modulateur 16 reçoit si besoin un signal Tx provenant d'un circuit 11 de commande et d'exploitation des transmissions. Ce circuit 11 est généralement pourvu d'un microprocesseur de traitement de commandes et des données, communiquant avec différents circuits d'entrée/sortie (clavier, écran, élément d'échange avec un serveur, etc.) et/ou de traitement non détaillés. Les éléments du terminal 1 tirent le plus souvent l'énergie nécessaire à leur fonctionnement d'un circuit d'alimentation (non représenté) raccordé, par exemple, au réseau de distribution électrique (secteur) ou à une batterie (par exemple, celle d'un véhicule automobile ou d'un téléphone ou ordinateur portable). Le modulateur 16 fournit une porteuse haute fréquence (par exemple, à 13,56 MHZ) au circuit oscillant série L1-C1 qui engendre un champ magnétique.

L'élément capacitif C1 est, par exemple, un élément à capacité variable et commandable par un signal CTRL. Cet élément participe à la régulation de phase du courant I1 dans l'antenne L1 par rapport à un signal de référence. Cette régulation est une régulation du signal haute fréquence, c'est-à-dire du signal de la porteuse correspondant au signal fourni à l'amplificateur 14 en l'absence de données Tx à transmettre. La régulation est effectuée en faisant varier la capacité C1 du circuit oscillant du terminal de façon à maintenir le courant dans l'antenne en relation de phase constante avec un signal de référence. Ce signal de référence correspond, par exemple, au signal OSC fourni au modulateur 14. Le signal CTRL est issu d'un circuit 17 (COMP) dont le rôle est de détecter l'écart de phase par rapport au signal de référence et de modifier en conséquence la capacité de l'élément C1. Le comparateur reçoit une information MES sur le courant I1 dans le circuit oscillant détecté par l'élément de mesure 15 (par exemple, un transformateur d'intensité ou une résistance) .

Un transpondeur 2, apte à coopérer avec le terminal 1, comporte un circuit oscillant, par exemple parallèle, formé d'une inductance L2 en parallèle avec un condensateur C2 entre deux bornes 21 et 22. Le circuit oscillant parallèle (appelé circuit résonant en réception) est destiné à capter le champ magnétique engendré par le circuit oscillant L1-C1 du terminal 1. Les circuits L2-C2 et L1-C1 sont accordés sur une même fréquence de résonance (par exemple 13,56 MHz). Les bornes 21 et 22 sont reliées à deux bornes d'entrée alternatives d'un pont redresseur 23 (le plus souvent double alternance). Les bornes de sortie redressée du pont 23 définissent respectivement une borne positive 24 et une borne de référence 25. Un condensateur Ca est connecté entre les bornes 24 et 25 de façon à lisser la tension redressée. Le cas échéant, l'énergie récupérée sert à recharger une batterie non représentée.

Quand le transpondeur 2 se trouve dans le champ du terminal 1, une tension haute fréquence est engendrée aux bornes du circuit résonant L2-C2. Cette tension, redressée par le pont 23 et lissée par le condensateur Ca, fournit une tension d'alimentation à des circuits électroniques du transpondeur par l'intermédiaire d'un régulateur de tension 26 (REG). Ces circuits comprennent généralement une unité de traitement 27 (par exemple un microcontrôleur $\mu$C) associée à une mémoire (non représentée), un démodulateur 28 (DEM) des signaux éventuellement reçus du terminal 1, et un modulateur 29 (MOD) pour transmettre des informations au terminal. Le transpondeur est généralement synchronisé au moyen d'une horloge (CLK) extraite, par un bloc 20, du signal haute fréquence récupéré, avant redressement, sur une des bornes 21 ou 22. Le plus souvent, tous les circuits électroniques du transpondeur 2 sont intégrés dans une même puce.

Pour transmettre des données du terminal 1 vers le transpondeur, le circuit 16 module (généralement en amplitude) la porteuse (signal OSC) en fonction du signal Tx. Côté transpondeur 2, ces données sont démodulées par le démodulateur 28 à partir de la tension $V_{Ca}$. Le cas échéant, le démodulateur prélève le signal à démoduler en amont du pont de redressement.

Pour transmettre des données du transpondeur 2 vers le terminal 1, le modulateur 29 commande un étage de modulation 30 (rétromodulation) de la charge constituée par les circuits du transpondeur sur le champ magnétique produit par le terminal. Cet étage est généralement constitué d'un interrupteur électronique K30 (par exemple, un transistor) et d'une résistance R30 (ou d'une capacité), en série entre les bornes 24 et 25. L'interrupteur K30 est commandé à une fréquence (par exemple, 847,5 kHz) dite de sous-porteuse, nettement inférieure (généralement avec un rapport d'au moins 10) à la fréquence du signal d'excitation du circuit oscillant du terminal 1. Lorsque l'interrupteur K30 est fermé, le circuit oscillant du transpondeur est soumis à un amortissement supplémentaire par rapport à la charge constituée par les circuits 20, 26, 27, 28, et 29 de sorte que le transpondeur prélève une quantité d'énergie plus importante du champ magnétique haute fréquence. Côté terminal 1, l'amplificateur 14 maintient constante l'amplitude du signal d'excitation haute fréquence. Par conséquent, la variation d'énergie du transpondeur se traduit par une variation d'amplitude et de phase du courant dans l'antenne L1. Cette variation est détectée par un démodulateur d'amplitude ou de phase du terminal. Dans le mode de réalisation illustré en figure 2, le comparateur 17 intègre un démodulateur de phase servant également à démoduler le signal provenant du transpondeur. Par conséquent, ce comparateur 17 fournit un signal Rx restituant une rétromodulation éventuelle de données reçues d'un transpondeur au circuit 11. D'autres circuits de démodulation peuvent être prévus, par exemple un circuit exploitant une mesure de la tension aux bornes du condensateur C1.

De nombreuses variantes existent pour coder/décoder et moduler/démoduler les communications entre un transpondeur et un terminal.

Le temps de réponse de la boucle de régulation de phase est suffisamment long pour ne pas gêner la rétromodulation éventuelle provenant d'un transpondeur, et suffisamment courte devant la vitesse de passage d'un transpondeur dans le champ du terminal. On peut parler de régulation statique par rapport aux fréquences de modulation (par exemple, la fréquence de la porteuse de téléalimentation de 13,56 MHz et la fréquence de rétromodulation de 847,5 KHz utilisée pour transmettre des données du transpondeur vers la borne).

Un exemple de terminal à régulation de phase est décrit dans le document EP-A-0 857 981.

Le fait que la phase soit régulée côté terminal permet d'exploiter des mesures de courant et de tension dans le circuit oscillant du transpondeur pour en déduire des informations relatives au couplage du transpondeur lorsqu'il est dans le champ du terminal. Le coefficient de couplage entre le circuit oscillant du terminal et celui du transpondeur dépend essentiellement de la distance séparant le transpondeur du terminal. Le coefficient de couplage, noté k, est toujours compris entre 0 et 1. Il peut être défini par la formule :

$$k = \frac{M}{\sqrt{L1 \cdot L2}} \, , \qquad \text{(formule 1)}$$

dans laquelle M représente l'inductance mutuelle entre les inductances L1 et L2 des circuits oscillants du terminal et du transpondeur.

On définit un couplage optimum comme étant la position à laquelle la tension $V_{C2}$ aux bornes du circuit oscillant du transpondeur est maximale. Ce couplage optimum, noté $k_{opt}$, peut s'exprimer :

$$k_{opt} = \sqrt{\frac{L2}{L1} \cdot \frac{R1}{R2}} \, , \qquad \text{(formule 2)}$$

où R2 représente la résistance équivalente à la charge (load) constituée par les éléments du transpondeur sur son propre circuit oscillant. En d'autres termes, la résistance R2 représente la résistance équivalente de tous les circuits (microprocesseur, moyen de rétromodulation, etc.) du transpondeur 2, ramenée en parallèle sur le condensateur C2 et l'inductance L2 (avant ou après le pont redresseur). On appellera "charge résistive" la conductance apportée par les circuits du transpondeur, donc leur consommation. Le niveau de cette charge est symbolisé par la résistance R2 en parallèle aux bornes du circuit oscillant. Dans la formule 2 ci-dessus, on a négligé la résistance série de l'inductance L1 (antenne du terminal). On peut également considérer que la valeur de cette résistance série est, par simplification, incluse dans la valeur de la résistance R1.

La figure 3 représente un exemple d'allure de la tension $V_{C2}$ récupérée côté transpondeur en fonction du couplage normalisé $k/k_{opt}$ par rapport au couplage optimum. La courbe part de l'origine des ordonnées (tension nulle) pour un couplage nul. Cela correspond à un éloignement du transpondeur et du terminal tel qu'aucun signal n'est capté par le transpondeur. La tension $V_{C2}$ atteint un maximum $V_{C2opt}$ pour le coefficient de couplage optimum $k_{opt}$ ($k/k_{opt}$ = 1), puis décroît jusqu'à une valeur intermédiaire VC2(1) atteinte au couplage k = 1.

Comme l'illustre la figure 3, la tension $V_{C2}$ passe par deux points d'inflexion pour des valeurs de couplage correspondant à des rapports $k/k_{opt} = 1/\sqrt{3}$ et $k/k_{opt} = \sqrt{3}$, pour lesquels la tension $V_{C2}$ prend la valeur

$$V_{C2opt} \cdot \frac{\sqrt{3}}{2} \, .$$

Pour évaluer, côté transpondeur, son couplage avec le terminal, on exploite l'information de la tension $V_{C2}$ aux bornes de l'élément capacitif C2 de son circuit oscillant. Cette tension est donnée par la relation :

$$V_{C2} = \frac{I2}{\omega \cdot C_2} \, , \qquad \text{(formule 3)}$$

où I2 représente le courant dans le circuit oscillant du transpondeur, et où $\omega$ représente la pulsation du signal.

Le courant I2 est égal à :

$$I2 = \frac{M \cdot \omega \cdot I1}{Z2} \, , \qquad \text{(formule 4)}$$

où I1 représente le courant dans le circuit oscillant du terminal et où Z2 représente l'impédance du transpondeur.

L'impédance Z2 du transpondeur est donnée par la relation suivante :

$$Z2^2 = X2^2 + \left(\frac{L2}{R2.C2}\right)^2 , \qquad \text{(formule 5)}$$

où X2 représente la partie imaginaire de l'impédance du circuit oscillant ( $X2 = \omega \cdot L2 - \dfrac{1}{\omega \cdot C2}$ ) .

Par ailleurs, le courant I1 dans le circuit oscillant du terminal est donné par la relation :

$$I1 = \frac{Vg}{Z1_{app}} , \qquad \text{(formule 6)}$$

où Vg désigne une tension, dite de générateur, excitant le circuit oscillant du terminal, et où $Z1_{app}$ représente l'impédance apparente du circuit oscillant.

Le fait de réguler la phase du circuit oscillant du terminal permet que toutes les variations qui auraient tendance à modifier, de façon statique devant les fréquences de modulation, la partie imaginaire de la charge (load) constituée par le transpondeur, sont compensées par la boucle de régulation de phase. Ainsi, on s'assure qu'en fonctionnement statique la partie imaginaire de l'impédance $Z1_{app}$ est nulle. Par conséquent, cette impédance $Z1_{app}$ devient égale à la résistance apparente $R1_{app}$ (partie réelle de l'impédance) et peut s'exprimer sous la formé :

$$Z1_{app} = R1_{app} = R1 + \frac{k^2 \cdot \omega^2 \cdot L1 \cdot L2^2}{Z2^2 \cdot R2 \cdot C2} . \qquad \text{(formule 7)}$$

Comme les circuits oscillants sont accordés, on peut considérer que la partie imaginaire X2 de l'impédance Z2 est, en première approximation, proche de zéro. Il en découle que la valeur de l'impédance Z2 peut s'écrire :

$$Z2 = \frac{L2}{R2 \cdot C2} . \qquad \text{(formule 8)}$$

En reportant cette simplification dans les formules 4 et 7, et en reportant la formule 4 dans la formule 3, on obtient, pour la tension récupérée $V_{C2}$ aux bornes du circuit oscillant du transpondeur, la formule :

$$V_{C2} = k \cdot \sqrt{\frac{L1}{L2}} \cdot \frac{Vg}{\dfrac{R1}{R2} + k^2 \cdot \dfrac{L1}{L2}} . \qquad \text{(formule 9)}$$

En position de couplage optimum $k_{opt}$, la tension maximale $V_{C2opt}$ est donc donnée par la formule (en combinant les formules 2 et 9) :

$$V_{C2opt} = \frac{Vg}{2} \cdot \sqrt{\frac{R2}{R1}} . \qquad \text{(formule 10)}$$

On notera que la formule 9 n'est applicable qu'en considérant le circuit oscillant du transpondeur L2-C2 réglé à la fréquence d'accord, c'est-à-dire que $\omega \cdot \sqrt{L2 \cdot C2} = 1$.

En combinant les formules 9 et 10 et en exprimant le couplage de façon normalisée par le couplage optimum $(k/k_{opt})$, on obtient l'expression suivante de la tension $V_{C2}$ :

$$V_{C2} = 2 \cdot V_{C2opt} \cdot \frac{\dfrac{k}{k_{opt}}}{1 + \left(\dfrac{k}{k_{opt}}\right)^2} \cdot \qquad \text{(formule 11)}$$

Pour une valeur de couplage k donnée, en considérant que l'impédance du circuit oscillant du terminal ne varie pas et que les circuits restent accordés, le rapport entre les coefficients courants k et les coefficients optimum $k_{opt]R20}$ et $k_{opt]R21}$, respectivement pour une résistance R2 de valeur R20 et de valeur R21 donne, d'après la formule 2, l'expression suivante :

$$\frac{\dfrac{k}{k_{opt]R20}}}{\dfrac{k}{k_{opt]R21}}} = \sqrt{\frac{R20}{R21}} \cdot \qquad \text{(formule 12)}$$

Toujours pour une valeur de couplage k donnée et en considérant que l'impédance du circuit oscillant du terminal ne varie pas et que les circuits restent accordés, le rapport entre les valeurs $V_{C2]R21}$ et $V_{C2]R20}$ de la tension $V_{C2}$, respectivement pour les valeurs R21 et R20 de la résistance R2, donne la relation suivante :

$$\frac{V_{C2]R21}}{V_{C2]R20}} = \frac{\left(\dfrac{k}{k_{opt]R20}}\right)^2 + 1}{\left(\dfrac{k}{k_{opt]R20}}\right)^2 + \dfrac{R20}{R21}} \cdot \qquad \text{(formule 13)}$$

Il ressort de la formule 13 qu'en augmentant la valeur de la résistance R2 d'une première valeur R20 vers une second valeur R21 supérieure (ce qui revient à diminuer la charge des circuits du transpondeur sur le circuit oscillant L2-C2), la tension $V_{C2]R21}$ sera supérieure à la tension $V_{C2]R20}$.

On prévoit de tirer profit de cette caractéristique pour évaluer la position du couplage k par rapport à sa valeur optimale $k_{opt]R20}$ avec une première valeur de résistance R20.

En effet, pour une position de couplage $k_{opt]R20}$ correspondant au couplage optimum avec la résistance R20, la formule 12 permet d'écrire, avec la tension $V_{C2]R20}$ égale à $VC2_{opt]R20}$ :

$$\frac{V_{C2]R21}}{V_{C2opt]R20}} = \frac{2}{1 + \left(\dfrac{R20}{R21}\right)} \cdot \qquad \text{(formule 14)}$$

On prévoit d'utiliser ces relations pour déterminer, à partir d'un rapport "r" entre les tensions $V_{C2]R21}$ et $V_{C2]R20}$ avec des valeurs R21 et R20 de résistance qui sont connues, la position du transpondeur par rapport au couplage optimum $k_{opt]R20}$.

Si $\dfrac{V_{C2]R21}}{V_{C2]R20}} > \dfrac{2}{1+\left(\dfrac{R20}{R21}\right)}$ (formule 15), alors, le couplage courant k est inférieur au couplage optimum

$k_{opt]R20}$

A l'inverse si $\dfrac{V_{C2]R21}}{V_{C2]R20}} < \dfrac{2}{1+\left(\dfrac{R20}{R21}\right)}$ (formule 16), le couplage courant k est supérieur au couplage optimum $k_{opt]R20}$. Si les deux valeurs sont égales, cela signifie que l'on est au point de couplage optimum.

En pratique, on ne mesure pas directement la tension aux bornes du circuit oscillant, mais la tension lissée aux bornes du condensateur $V_{Ca}$ en sortie du pont redresseur 23. Cette tension $V_{Ca}$ est proportionnelle à la tension $V_{C2}$. Comme on évalue des rapports de tension, il n'est pas nécessaire de connaître le coefficient de proportionnalité entre les tensions $V_{C2}$ et $V_{Ca}$. Dans un exemple de réalisation particulier, la mesure est effectuée par le microprocesseur. La mémorisation des valeurs des tensions mesurées s'effectue, soit de façon analogique, mais préférentiellement de façon numérique sur plusieurs bits dont le nombre dépend de la précision d'analyse souhaitée.

L'estimation de la position du couplage courant k par rapport à sa valeur optimale peut être affinée en estimant la position par rapport aux points d'inflexion de la courbe de la figure 3. En effet, pour des positions de couplage où le rapport $k/k_{opt} = 1/\sqrt{3}$ et $k/k_{opt} = \sqrt{3}$, la formule 13 permet d'écrire :

$$r = \dfrac{4}{1+3\cdot\left(\dfrac{R20}{R21}\right)}, \text{ et} \qquad\qquad \text{(formule 17)}$$

$$r = \dfrac{4}{3+\left(\dfrac{R20}{R21}\right)}. \qquad\qquad \text{(formule 18)}$$

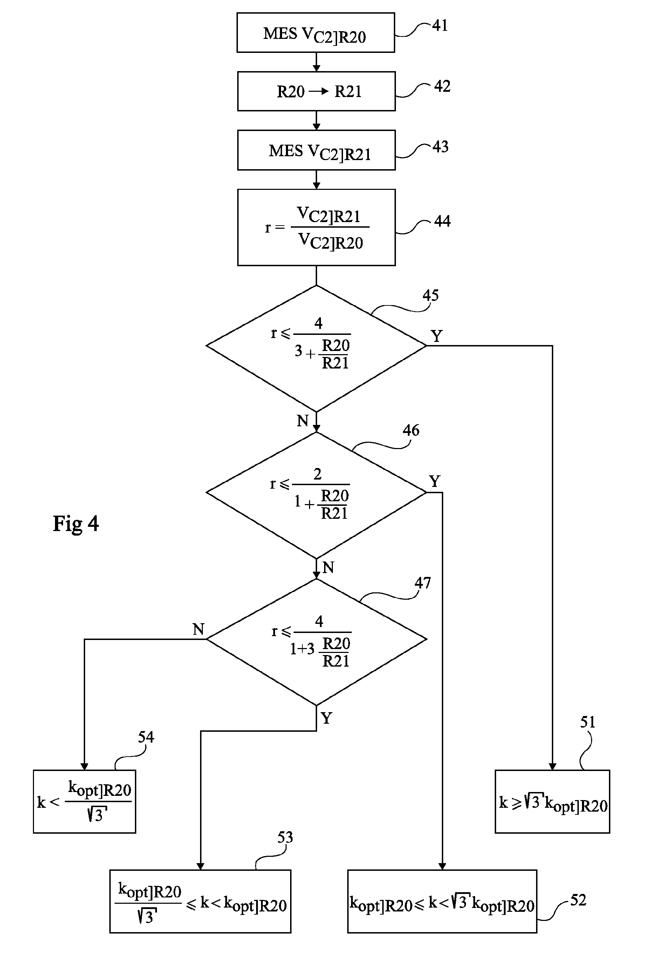

La figure 4 illustre la mise en oeuvre d'un tel mode de réalisation. Pour simplifier l'exposé de la figure 4, on continue à se référer aux valeurs $V_{C2]R20}$ et $V_{C2]R21}$, sachant qu'il est en pratique plus facile de mesurer les valeurs $V_{Ca]R20}$ et $V_{Ca]R21}$ de la tension $V_{Ca}$ mais que cela ne change rien sur les seuils de comparaison du rapport r.

On commence (bloc 41, MES $V_{C2]R20}$) par mesurer et mémoriser la tension aux bornes du condensateur C2 avec une première valeur R20 de résistance R2. Puis (bloc 42, R20->R21), on modifie la valeur de l'élément résistif vers une valeur supérieure.

Puis (bloc 43, $V_{C2]R21}$), on mesure la tension $V_{C2}$ avec la valeur de résistance R21 que l'on mémorise.

On calcule et on mémorise alors (bloc 44, $r = \dfrac{V_{C2]R21}}{V_{C2]R20}}$) le rapport r entre les tensions mesurées pour le comparer aux différents seuils permettant de déterminer la position du couplage par rapport au couplage optimum et aux points caractéristiques où $k/k_{opt} = 1/\sqrt{3}$ et $k/k_{opt} = \sqrt{3}$. En variante, le rapport r est calculé pour chaque comparaison ultérieure.

Par exemple, on commence par comparer (bloc 45, $r \leq \dfrac{4}{3+\left(\dfrac{R20}{R21}\right)}$) le rapport r par rapport à un seuil correspondant au point $k/k_{opt]R20} = \sqrt{3}$. Si r est inférieur ou égal à ce seuil (sortie Y du bloc 45), le circuit de traitement 27 fournit l'information (bloc 51, $k \geq \sqrt{3} \cdot k_{opt]R20}$) que le couplage courant est supérieur ou égal au couplage optimum $k_{opt]R20}$, multiplié par $\sqrt{3}$.

Si r est supérieur au premier seuil (sortie N du bloc 45), on teste (bloc 46, $r \leq \dfrac{2}{1+\left(\dfrac{R20}{R21}\right)}$) s'il est inférieur ou égal à un deuxième seuil correspondant au couplage optimum $k_{opt]R20}$. Dans l'affirmative (sortie Y du bloc 46), le couplage courant est compris entre le couplage optimum et son produit par $\sqrt{3}$ (bloc 52, $k_{opt]R20} \leq k < \sqrt{3} \cdot k_{opt]R20})$.

Dans la négative (sortie N du bloc 46), on teste (bloc 47, $r \leq \dfrac{4}{1+3\cdot\left(\dfrac{R20}{R21}\right)}$) si r est inférieur ou égal à un troisième seuil correspondant au point $k/k_{opt]R20} = 1/\sqrt{3}$. Dans l'affirmative (sortie Y du bloc 47), le couplage courant est compris entre le couplage optimum et le quotient du couplage optimum par $\sqrt{3}$ (bloc 53, $\dfrac{k_{opt]R20}}{\sqrt{3}} \leq k < k_{opt]R20}$). ). Dans la négative (sortie N du bloc 47), le couplage courant est inférieur au couplage optimum divisé par $\sqrt{3}$ (bloc 54, $k < \dfrac{k_{opt]R20}}{\sqrt{3}}$).

Une fois les mesures effectuées avec la valeur R21, on revient à la valeur R20 considérée comme nominale. Ce retour à la valeur nominale intervient, de préférence, dès la mesure effectuée (avant l'étape 44). On peut cependant prévoir qu'il intervienne plus tard dans le procédé, par exemple en fin d'évaluation.

Il est donc possible, par deux mesures de tension avec deux valeurs de résistance du circuit oscillant du transpondeur, de lui faire déterminer le couplage courant avec le terminal par rapport à un couplage optimum.

L'évaluation peut également être effectuée en diminuant la valeur de la résistance R2. On veillera alors à ce que la valeur soit suffisante pour préserver une valeur $V_{C2]R21}$ de la tension $V_{C2}$ suffisante pour assurer une alimentation des circuits du transpondeur.

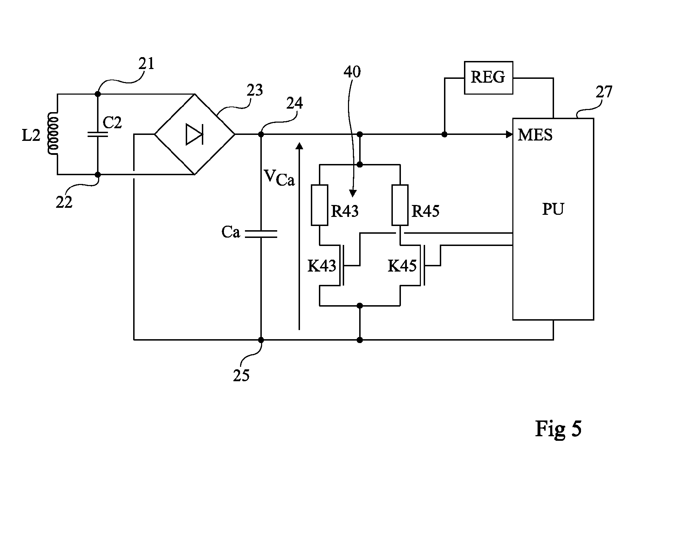

La figure 5 est un schéma-blocs d'un mode de réalisation d'un transpondeur 2, équipé pour déterminer automatiquement, lorsqu'il est dans le champ d'un terminal (non représenté), le couplage courant par rapport au couplage optimum. La représentation de la figure 5 est simplifiée par rapport à celle de la figure 2. En particulier, les éléments de démodulation, de rétromodulation et d'obtention de la fréquence d'horloge n'ont pas été illustrés.

Comme précédemment, le transpondeur 2 est basé sur un circuit oscillant parallèle L2-C2 dont les bornes 21 et 22 sont reliées aux bornes d'entrée d'un pont de redressement 23. Entre les bornes 24 et 25 du pont redresseur 23, est prévu un circuit résistif commutable 40. Par exemple, deux résistances R43 et R45 sont connectées en parallèle en étant chacune en série avec un interrupteur K43, respectivement K45. Les interrupteurs K43 et K45 (par exemple, des transistors MOS) sont destinés à être commutés pour mettre en oeuvre le procédé de détermination de la position de couplage. L'unité de traitement 27 (PU) reçoit une information sur la tension $V_{Ca}$ sur une entrée MES pour mettre en oeuvre le procédé décrit ci-dessus. Dans l'exemple de la figure 5, lorsque les deux résistances R43 et R45 sont fonctionnellement connectées, la résistance R2 (charge des circuits du transpondeur) représente la valeur R20. La déconnexion d'une des résistances (par exemple, la résistance R43) augmente la résistance R2 vers la valeur R21. D'autres connexions et commutations peuvent être prévues selon la variante du procédé mis en oeuvre. Par exemple, une seule résistance commutable peut être utilisée en considérant qu'une des deux valeurs de la résistance R2 correspond à la charge résistive des autres circuits du transpondeur.

Selon un mode de réalisation préféré, la résistance commutable correspond à celle utilisée pour une rétromodulation résistive. On effectue une première mesure en commutant la résistance de rétromodulation pour qu'elle soit fonctionnellement dans le circuit (interrupteur K30 à l'état passant dans l'exemple de la figure 2). On mesure la tension $V_{C2]R20}$. Puis, on ouvre l'interrupteur K30 et on mesure la tension $V_{C2]R21}$. La mise en oeuvre du procédé décrit ne requiert alors aucune modification structurelle d'un transpondeur équipé d'un microcontrôleur. Il suffit de programmer ce microcontrôleur pour qu'il commute ainsi la résistance de rétromodulation.

Les seuils exploités pour déterminer la position par rapport au couplage optimum ne dépendent que des valeurs R20 et R21 qui sont connues pour un transpondeur donné. Par conséquent, le transpondeur n'a pas nécessairement besoin de moyens de calcul évolués de type microprocesseur mais peut simplement mesurer les tensions, calculer le rapport et le comparer par rapport à des seuils analogiques générés, par exemple, par des ponts diviseurs résistifs. Selon un autre exemple, les seuils sont précalculés et stockés dans une mémoire non volatile du transpondeur.

En variante, l'augmentation ou la diminution de la résistance équivalente R2 est provoquée par une variation de la consommation des circuits du transpondeur, typiquement de l'unité de traitement 27. Par exemple, pour diminuer la valeur de la résistance R2 (augmenter la consommation), on déclenche l'exécution de calculs ou de traitement par l'unité 27. On peut également provoquer une augmentation de la résistance équivalente R2 en réduisant la consommation de l'unité 20 en interrompant certains calculs. La variation de la résistance R2 est connue à partir du moment où la consommation de différentes tâches à exécuter par l'unité 27 est connue, ce qui est généralement estimé à la conception du transpondeur ou peut être obtenue dans une phase d'apprentissage avec un terminal quelconque.

Les calculs requis pour évaluer le couplage courant sont suffisamment simples pour que leur temps d'exécution soit négligeable par rapport à la vitesse de déplacement d'un transpondeur devant un terminal (donc la vitesse de variation du coefficient de couplage). Les modes de réalisation décrits sont par ailleurs applicables au cas où le transpondeur reste posé sur une surface de réception du terminal, le couplage ne variant donc pas pendant toute la communication.

La connaissance du coefficient de couplage courant par rapport au couplage optimum peut avoir plusieurs applications.

Par exemple, cette information peut servir à détecter un risque de surchauffe du transpondeur. En effet, lorsque le couplage est proche du couplage optimum, l'énergie récupérée par le transpondeur est maximale. On peut alors éviter une éventuelle surchauffe en provoquant un désaccord du circuit oscillant, par exemple en prévoyant un élément capacitif commutable pour désaccorder le circuit oscillant L2-C2. On prévoit de désaccorder le circuit oscillant si le rapport $k/k_{opt}$ est compris entre deux seuils autour de la position de couplage optimum. On peut choisir, par exemple, un désaccord quand le coefficient de couplage k est compris entre $k_{opt}/\sqrt{3}$ et $k_{opt} \cdot \sqrt{3}$.

Selon un autre exemple d'application, la connaissance de la position du couplage par rapport au couplage optimum permet d'optimiser la gestion d'énergie dans la communication avec un terminal. On peut ainsi sélectionner les fonctions exécutées par l'unité de traitement du transpondeur en fonction de l'énergie disponible.

L'évaluation du couplage peut être effectuée périodiquement pendant une communication. La seule précaution est de ne pas évaluer le couplage pendant une rétromodulation du transpondeur. Une première évaluation est par exemple effectuée dès que l'énergie récupérée par le transpondeur est suffisante pour que le microprocesseur 27 fonctionne. Puis, on effectue des mesures périodiques pendant la communication.

Selon encore un autre exemple, la position du couplage courant par rapport au couplage optimum est transmise au terminal pour qu'il adapte la communication (les requêtes qu'il envoie au transpondeur) à l'énergie dont dispose le transpondeur et qui conditionne sa capacité de calcul.

On notera que la détermination du couplage s'effectue sans qu'il soit nécessaire d'établir une communication avec le terminal.

De plus, la valeur du couplage optimum varie d'un terminal à un autre. Evaluer le couplage courant par rapport au couplage optimum tel que décrit ci-dessus permet de s'affranchir des caractéristiques d'un terminal donné et rend l'évaluation indépendante du terminal. Ainsi, un transpondeur équipé des moyens d'évaluation du couplage de l'invention peut fonctionner avec tout terminal existant.

## Revendications

1. Procédé d'évaluation du facteur de couplage courant (k) entre un transpondeur électromagnétique (2) et un terminal (1), dans lequel un rapport (r) entre des informations, représentatives d'une tension aux bornes d'un circuit oscillant (L2, C2) du transpondeur et obtenues pour deux valeurs (R20, R21) de charge résistive (R2), est comparé à un ou plusieurs seuils.

2. Procédé selon la revendication 1, dans lequel :

une première information, relative au niveau d'une tension continue ($V_{Ca}$) fournie par un redresseur (23) aux bornes du circuit oscillant (L2, C2), est mesurée et mémorisée pour une première valeur (R20) de charge résistive (R2) ; et

une seconde information, relative au niveau de ladite tension continue, est mesurée et mémorisée pour une seconde valeur (R21) de charge résistive.

**3.** Procédé selon la revendication 1 ou 2, dans lequel l'évaluation fournit une position du facteur de couplage courant (k) par rapport à une position de couplage optimum ($k_{opt]R20}$) avec une des deux valeurs (R20) de charge résistive (R2).

**4.** Procédé selon l'une quelconque des revendications 1 à 3, dans lequel lesdits seuils sont fonction desdites valeurs (R20, R21).

**5.** Procédé selon l'une quelconque des revendications 1 à 4, dans lequel une variation de la charge résistive (R2) entre les première et seconde valeurs (R20, R21) est obtenue en modifiant la consommation de circuits de traitement (27) que comporte le transpondeur.

**6.** Procédé selon l'une quelconque des revendications 1 à 4, dans lequel une variation de la charge résistive (R2) entre les première et seconde valeurs (R20, R21) est obtenue en commutant un élément résistif de rétromodulation (30) que comporte le transpondeur (2).

**7.** Procédé de protection d'un transpondeur électromagnétique contre une éventuelle surchauffe à partir d'une évaluation du couplage selon l'une quelconque des revendications 1 à 6, dans lequel un désaccord du circuit oscillant (L2-C2) est provoqué si le rapport (r) entre le couplage courant (k) et le couplage optimum ($k_{opt]R20}$) est compris entre deux seuils.

**8.** Transpondeur électromagnétique comportant :

un circuit oscillant (L2, C2) en amont d'un circuit de redressement (23) propre à fournir une tension continue ($V_{Ca}$) lorsque le transpondeur se trouve dans le champ magnétique d'un terminal (1) ; et
au moins une unité de traitement (27) programmée pour mettre en oeuvre le procédé selon l'une quelconque des revendications 1 à 7.

**9.** Transpondeur selon la revendication 8, comportant en outre au moins un élément résistif commutable (30, 40) propre à être fonctionnellement connecté en parallèle sur le circuit oscillant.

**10.** Transpondeur selon la revendication 9, dans lequel ledit élément résistif commutable (40) est connecté aux bornes de sortie du circuit de redressement (23).

**Patentansprüche**

**1.** Ein Verfahren zum Auswerten des Stromkopplungsfaktors (k) zwischen einem elektromagnetischen Transponder (2) und einem Endgerät (1), wobei ein Verhältnis (r) zwischen Daten, die durch eine Spannung über einen Oszillatorschaltkreis (L2, C2) des Transponders repräsentiert werden und die für zwei Werte (R20, R21) der Widerstandslast (R2) erzielt werden, mit einem oder mehreren Schwellwerten verglichen wird.

**2.** Das Verfahren nach Anspruch 1, wobei:

erste Daten, relativ zu dem Pegel einer DC- bzw. einer Gleichspannung ($V_{Ca}$) und bereitgestellt durch einen Gleichrichter (23) über den Oszillatorschaltkreis (L2, C2), gemessen werden und für einen ersten Wert (R20) der Widerstandslast (R2) abgespeichert werden; und
zweite Daten, relativ zu dem Pegel der Gleichspannung, gemessen werden und für einen zweiten Wert (R21) der Widerstandslast gespeichert werden.

**3.** Das Verfahren nach einem der Ansprüche 1 oder 2, wobei die Auswertung eine Position des Stromkopplungsfaktors (k) bezüglich eines optimalen Kopplungsfaktors ($k_{opt]R20}$) bereitstellt, und zwar mit einem der zwei Werte (R20) der Widerstandslast (R2).

**4.** Das Verfahren nach einem der Ansprüche 1 bis 3, wobei die Schwellwerte eine Funktion der Werte (R20, R21) sind.

**5.** Das Verfahren nach einem der Ansprüche 1 bis 4, wobei eine Variation der Widerstandslast (R2) zwischen dem ersten und dem zweiten Wert (R20, R21) durch eine Modifikation des Verbrauchs der Verarbeitungsschaltkreise (27) erzielt wird, die in dem Transponder enthalten sind.

**6.** Das Verfahren nach einem der Ansprüche 1 bis 4, wobei eine Variation der Widerstandslast (R2) zwischen dem ersten und dem zweiten Wert (R20, R21) durch ein Schalten eines Widerstands-Retromodulationselements (30) erzielt wird, das in dem Transponder (2) enthalten ist.

**7.** Ein Verfahren zum Schützen eines elektromagnetischen Transponders gegen eine mögliche Überhitzung, basierend auf einer Auswertung einer Kopplung gemäß einem der Ansprüche 1 bis 6, wobei ein de-tuning des Oszillatorschaltkreises (L2-C2) verursacht wird, wenn ein Verhältnis (r) zwischen der Stromkopplung (k) und der optimalen Kopplung ($k_{opt]R20}$) in einem Bereich zwischen zwei Schwellwerten liegt.

**8.** Ein elektromagnetischer Transponder, wobei der Transponder Folgendes aufweist:

einen Oszillatorschaltkreis (L2, C2), vorgelagert einem Gleichrichterschaltkreis (23), der geeignet ist eine DC-bzw. eine Gleichspannung ($V_{Ca}$) bereitzustellen wenn der Transponder in dem magnetischen Feld eines Endgerätes (1) anwesend ist; und
wenigstens eine Verarbeitungseinheit (27), die derart programmiert ist das Verfahren nach einem der Ansprüche 1 bis 7 zu implementieren.

**9.** Der Transponder nach Anspruch 8, wobei der Transponder ferner wenigstens ein schaltbares Widerstandselement (30, 40) aufweist, das geeignet ist funktionsgemäß mit dem Oszillatorschaltkreis parallel geschaltet zu sein.

**10.** Der Transponder nach Anspruch 9, wobei das schaltbare Widerstandselement (40) mit den Ausgangsanschlüssen des Gleichrichterschaltkreises (23) verbunden ist.

**Claims**

**1.** A method for evaluating the current coupling factor (k) between an electromagnetic transponder (2) and a terminal (1), wherein a ratio (r) between data, representative of a voltage across an oscillating circuit (L2, C2) of the transponder and obtained for two values (R20, R21) of the resistive load (R2), is compared with one or several thresholds.

**2.** The method of claim 1, wherein:

first data, relative to the level of a D.C. voltage ($V_{Ca}$) provided by a rectifier (23) across the oscillating circuit (L2, C2), are measured and stored for a first value (R20) of the resistive load (R2); and
second data, relative to the level of said D.C. voltage, are measured and stored for a second value (R21) of the resistive load.

**3.** The method of claim 1 or 2, wherein the evaluation provides a position of the current coupling factor (k) with respect to an optimum coupling position ($k_{opt]R20}$) with one of the two values (R20) of the resistive load (R2).

**4.** The method of any of claims 1 to 3, wherein said thresholds are a function of said values (R20, R21).

**5.** The method of any of claims 1 to 4, wherein a variation of the resistive load (R2) between the first and second values (R20, R21) is obtained by modifying the consumption of processing circuits (27) comprised in the transponder.

**6.** The method of any of claims 1 to 4, wherein a variation of the resistive load (R2) between the first and second values (R20, R21) is obtained by switching a resistive retromodulation element (30) comprised in the transponder (2).

**7.** A method for protecting an electromagnetic transponder against a possible overheating based on an evaluation of the coupling according to any of claims 1 to 6, wherein a detuning of the oscillating circuit (L2-C2) is caused if the ratio (r) between the current coupling (k) and the optimum coupling ($k_{opt]R20}$) ranges between two thresholds.

**8.** An electromagnetic transponder comprising:

an oscillating circuit (L2, C2) upstream of a rectifying circuit (23) capable of providing a D.C. voltage ($V_{Ca}$) when the transponder is present in the magnetic field of a terminal (1); and

at least one processing unit (27) programmed to implement the method of any of claims 1 to 7.

9. The transponder of claim 8, further comprising at least one switchable resistive element (30, 40) capable of being functionally connected in parallel on the oscillating circuit.

10. The transponder of claim 9, wherein said switchable resistive element (40) is connected to the output terminals of the rectifying circuit (23).

Fig 1

Fig 3

Fig 2

MES $V_{C2]R20}$ ~41

R20 → R21 ~42

MES $V_{C2]R21}$ ~43

$$r = \frac{V_{C2]R21}}{V_{C2]R20}}$$ ~44

~45
$$r \leqslant \frac{4}{3 + \frac{R20}{R21}}$$ Y

N

~46
$$r \leqslant \frac{2}{1 + \frac{R20}{R21}}$$ Y

Fig 4

N

N ~47
$$r \leqslant \frac{4}{1 + 3\frac{R20}{R21}}$$

Y

~54
$$k < \frac{k_{opt]R20}}{\sqrt{3}}$$

~51
$$k \geqslant \sqrt{3}\,k_{opt]R20}$$

~53
$$\frac{k_{opt]R20}}{\sqrt{3}} \leqslant k < k_{opt]R20}$$

$$k_{opt]R20} \leqslant k < \sqrt{3}\,k_{opt]R20}$$ ~52

Fig 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20080204206 A
- EP 0857981 A